# EUROPÄISCHE PATENTSCHRIFT

(11) **EP 1 361 347 B1**
(45) Veröffentlichungstag und Bekanntmachung des Hinweises auf die Patenterteilung: **19.01.2005**
(21) Anmeldenummer: 03000984.9
(22) Anmeldetag: 17.01.2003
(51) Int. Cl.: F01N 3/28, F01N 7/18

(54) **Katalysator für eine Brennkraftmaschine**
Catalytic Converter for an Internal Combustion Engine
Convertisseur catalytique pour un moteur à combustion interne

(30) Priorität: 22.04.2002 DE 10217925
(43) Veröffentlichungstag der Anmeldung: 12.11.2003
(73) Patentinhaber: J. Eberspächer GmbH & Co. KG, 73730 Esslingen (DE)
(72) Erfinder: Prommersberger, Holger, 70825 Korntal-Münchingen (DE); Hägele, Jochen, 73733 Esslingen (DE); Wirth, Georg, 73230 Kirchheim /Teck (DE)
(74) Vertreter: Bernhard, Uwe

(56) Entgegenhaltungen:
- EP-A- 0 471 175
- EP-A- 0 758 048
- US-A- 5 094 072
- US-A- 5 190 732

## Beschreibung

Die vorliegende Erfindung betrifft einen Katalysator für eine Brennkraftmaschine, insbesondere eines Kraftfahrzeugs.

Ein derartiger Katalysator besitzt üblicherweise ein Gehäuse, in dem in der Durchströmungsrichtung hintereinander zwei Monolithen untergebracht sind. Solch ein gattungsgemäßer Katalysator ist aus EP 0 758 048 A1 bekannt.

Die vorliegende Erfindung beschäftigt sich mit dem Problem, für einen Katalysator der eingangs genannten Art eine verbesserte Ausführungsform anzugeben, die insbesondere eine relativ hohe Lebenszeit aufweist und relativ preiswert herstellbar ist.

Dieses Problem wird durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Gehäuse mehrteilig aufzubauen, derart, dass einzelne Gehäuseteile teleskopartig ineinander gesteckt sind und im Steckbereich zwischen den Monolithen ein nach außen thermisch isolierendes Gasvolumen ausbilden. Die Bereitstellung des thermisch isolierenden Gasvolumens erfolgt dabei über eine geeignete Formgebung der ineinander gesteckten Gehäuseteile im Steckbereich, derart, dass ein eingesteckter Endabschnitt des einen Gehäuseteils frei im anderen Gehäuseteil endet und quer zur Durchströmungsrichtung zwischen sich und dem anderen Gehäuseteil das in Umfangsrichtung geschlossen umlaufende Gasvolumen vom unmittelbar durchströmten Innenraum des Gehäuses trennt. Die Ausbildung eines thermisch isolierenden Gasvolumens in einem geeigneten Spaltraum wird auch als "Gasspaltisolation" bezeichnet. Mit Hilfe einer derartigen Gasspaltisolation kann die thermische Belastung des Gehäuses im Abschnitt zwischen den Monolithen erheblich reduziert werden, wodurch sich in diesem Bereich auch die Wärmeabstrahlung an der Außenseite des Gehäuses entsprechend reduziert. Dies hat zur Folge, dass auch die auftretenden Wärmedehnungseffekte reduziert sind, wodurch sich die Lebensdauer des Gehäuses sowie der Monolith-Lagerung erhöht.

Die Integration der Gasspaltisolation in den Steckbereich der ineinander gesteckten Gehäuseteile, ermöglicht dabei einen einfachen Aufbau des Gehäuses, wodurch dieses preiswert herstellbar ist. Insbesondere wird kein separates Bauteil zur Bereitstellung der Gasspaltisolation benötigt, so dass außerdem Befestigungsmaßnahmen, z.B. eine zusätzliche Schweißnaht, zum Festlegen eines solchen Bauteils entfallen können.

Der gesteckte oder teleskopartige Zusammenbau der Gehäuseteile ermöglicht es außerdem, auf besonders einfache Weise Längentoleranzen der Gehäuseteile auszugleichen, indem die Gehäuseteile beim Zusammenbauen entsprechend in der Steck- bzw. Teleskoprichtung relativ zueinander ausgerichtet werden, bevor die Steckverbindung, z.B. durch eine Schweißnaht, fixiert wird.

Zweckmäßig erstreckt sich der das thermisch isolierende Gasvolumen enthaltende Spalt in der Durchströmungsrichtung im wesentlichen vom ersten Monolithen bis zum zweiten Monolithen. Durch diese Bauweise wird die komplette Übergangszone zwischen den aufeinander folgenden Monolithen nach außen thermisch isoliert.

Bei einer vorteilhaften Weiterbildung kann ein innerer Endabschnitt des ersten Gehäuseteils an seinem freien Ende im wesentlichen den selben Querschnitt wie der zweite Monolith aufweisen. Durch diese Bauweise ist sichergestellt, dass die den zweiten Monolithen außen umhüllende Monolith-Lagerung, in der Regel eine geeignete Lagermatte, nicht unmittelbar von der heißen Gasströmung beaufschlagt wird. Insoweit ist die Monolith-Lagerung des zweiten Monolithen durch die Gasspaltisolation thermisch geschützt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,

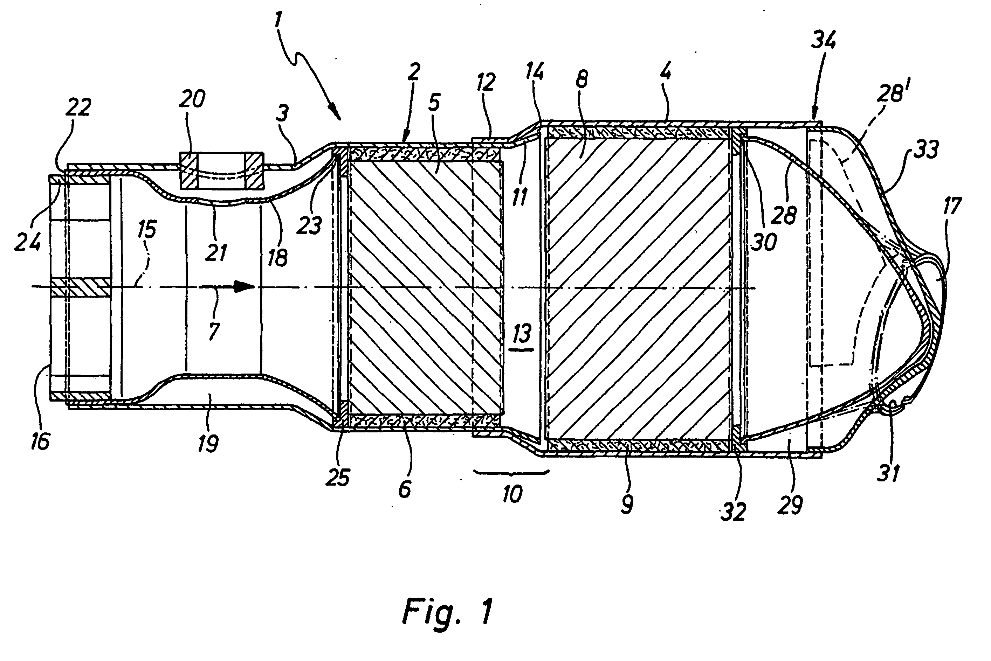

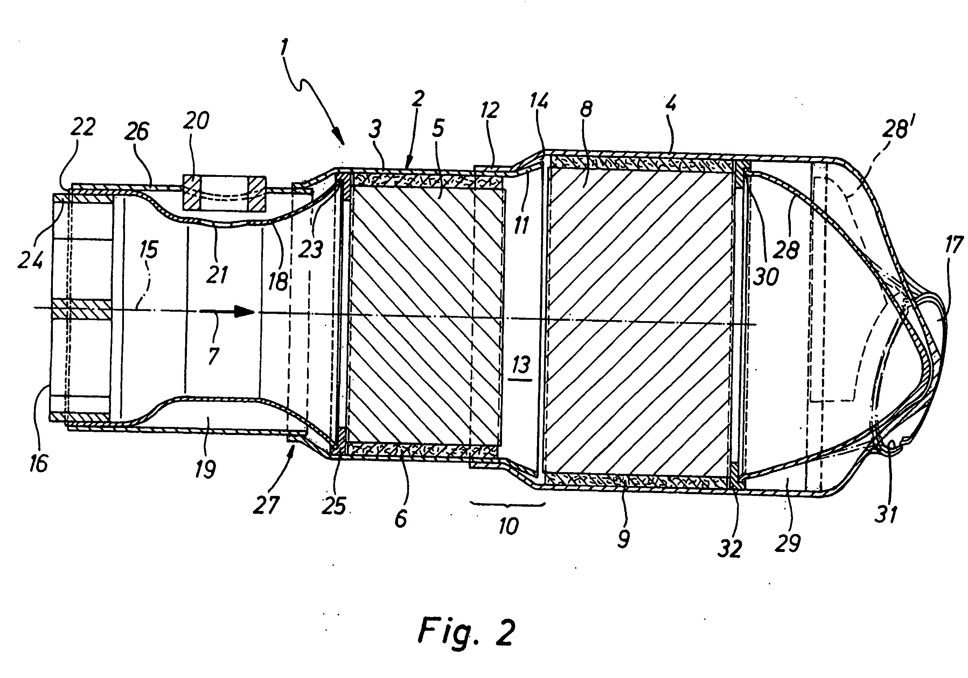

- Fig. 1 und 2: jeweils einen vereinfachten Längsschnitt durch einen Katalysator nach der Erfindung bei verschiedenen Ausführungsformen.

Entsprechend den Fig. 1 und 2 umfasst ein Katalysator 1 ein Gehäuse 2, das aus mehreren Gehäuseteilen, zumindest aus einem ersten Gehäuseteil 3 und einem zweiten Gehäuseteil 4, zusammengebaut ist. Ein derartiger Katalysator 1 wird in der Regel für eine Brennkraftmaschine, insbesondere bei einer Brennkraftmaschine eines Kraftfahrzeugs, zur Abgasreinigung verwendet, wozu der Katalysator 1 in einen Abgasstrang der Brennkraftmaschine eingesetzt ist.

Im ersten Gehäuseteil 3 ist ein erster Monolith 5 mittels einer ersten Monolith-Lagerung 6 gelagert, die den ersten Monolithen 5 quer zu einer durch einen Pfeil 7 angedeuteten Durchströmungsrichtung in Umfangsrichtung umhüllt. Eine derartige Monolith-Lagerung 6 wird in der Regel durch eine geeignete Lagermatte gebildet.

In entsprechender Weise ist auch im zweiten Gehäuseteil 4 ein zweiter Monolith 8 gelagert, der zu diesem Zweck mit einer zweiten Monolith-Lagerung 9 umhüllt ist.

Die beiden Gehäuseteile 3 und 4 sind in einem durch eine geschweifte Klammer gekennzeichneten Steckbereich 10 teleskopisch ineinander gesteckt. Dabei ist ein innerer Endabschnitt 11 des ersten Gehäuseteils 3 in einen äußeren Endabschnitt 12 des zweiten Gehäuseteils 4 so eingesteckt, dass sich die Endabschnitte 11 und 12 im Steckbereich 10 gegenseitig überlappen. In diesem Steckbereich 10 ist außerdem im Inneren des Gehäuses 2 eine Übergangszone 11 ausgebildet, in der die Monolithen 5 und 8 in der Durchströmungsrichtung 7 voneinander beabstandet sind.

Der erste Monolith 5 besitzt einen kleineren Querschnitt als der zweite Monolith 8. Bei der hier gezeigten bevorzugten Ausführungsform ist der erste Monolith 5 stromauf des zweiten Monolithen 8 angeordnet. Grundsätzlich könnte die Durchströmungsrichtung 7 auch umgekehrt gerichtet sein.

Erfindungsgemäß ist quer zur Durchströmungsrichtung 7 zwischen dem inneren Endabschnitt 11 und dem äußeren Endabschnitt 12 ein Spalt 14 ausgebildet, der in Umfangsrichtung geschlossen umläuft. Dieser Spalt 14 wird dadurch ausgebildet, dass in der Übergangszone 13 die Querschnitte der beiden Gehäuseteile 3 und 4 in entsprechender Weise aufeinander abgestimmt sind.

Da der Spalt 14 und somit das darin befindliche thermisch isolierende Gasvolumen mit Hilfe des in das zweite Gehäuseteil 4 hineinragenden inneren Endabschnitts 11 realisiert wird, ist diese "Gasspaltisolation" quasi in den Steckbereich 10 integriert, ohne dass hierzu ein zusätzliches, separates Bauteil erforderlich ist.

Eine derartige Gasspaltisolation verhindert eine direkte Beaufschlagung des Gehäuses 2 mit den im Betrieb durch den Katalysator 1 strömenden heißen Abgasen. Das im Spalt 14 stehende Gasvolumen dient als thermische Isolation und schützt zum einen das Gehäuse 2 und zum andern die Lagerung 9 des zweiten Monolithen 8 vor den heißen Abgasen. Gleichzeitig wird dadurch die Wärmeabstrahlung des Gehäuses 2 zwischen den Monolithen 5 und 8 reduziert. Darüber hinaus werden dadurch thermische Ausdehnungseffekte gerade im Steckbereich 10, in dem die beiden Gehäuseteile 3 und 4 miteinander verschweißt sind, reduziert. Die Dauerhaltbarkeit des Gehäuses 2 sowie der Lagerung 9 des zweiten Monolithen 8 können dadurch verbessert werden.

Bei den hier gezeigten Ausführungsformen besitzt der Katalysator 1 eine Längsachse 15, bezüglich der die beiden Gehäuseteile 3 und 4 sowie deren Monolithen 5 und 8 koaxial angeordnet sind.

Der äußere Endabschnitt 12 des zweiten Gehäuseteils 4 ist stromauf der Übergangszone 13 auf den Querschnitt des ersten Gehäuseteils 3 zusammengeschnürt, so dass der äußere Endabschnitt 12 auf der Außenseite des ersten Gehäuseteils 3 zur Anlage kommt und zweckmäßig dort mit dem ersten Gehäuseteil 3 verschweißt ist. Der äußere Endabschnitt 12 besitzt dementsprechend einen sich bis zur Anlage am ersten Gehäuseteil 3 verjüngenden Querschnitt.

Damit sich der Spalt 14 möglichst über die gesamte Übergangszone 13 erstreckt, ragt der innere Endabschnitt 11 des ersten Gehäuseteils 3 nahezu bis zum zweiten Monolithen 8 in das zweite Gehäuseteil 4 ein. Dabei weitet sich der Querschnitt des inneren Endabschnitts 11 vom ersten Monolithen 5 bis zum zweiten Monolithen 8 auf. Zweckmäßig ist die Dimensionierung des inneren Endabschnitts 11 so gewählt, dass er an seinem freien Ende etwa den selben Querschnitt aufweist, wie der zweite Monolith 8. Einerseits wird dadurch gewährleistet, dass der gesamte durchströmbare Querschnitt des zweiten Monolithen 8 mit Abgas beaufschlagt wird. Andererseits wird durch diese Dimensionierung gewährleistet, dass der Spalt 14 zumindest so groß ist, dass die zweite Monolith-Lagerung 9 des zweiten Monolithen 8 im wesentlichen nicht der Abgasströmung ausgesetzt ist. Die Dimensionierung des Spalts 14 ist demnach so gewählt, dass das darin enthaltene, thermisch isolierende Gasvolumen auch die Lagerung 9 des zweiten Monolithen 8 schützt.

Von besonderer Bedeutung ist hier, dass die Neigung des sich verjüngenden Bereichs des äußeren Endabschnitts 12 gegenüber der Durchströmungsrichtung 7 bzw. gegenüber der Längsachse 15 stärker gewählt ist als die Neigung des sich aufweitenden Bereichs des inneren Endabschnitts 11. Durch diese Formgebung wird gewährleistet, dass beim Zusammenbau der beiden Gehäuseteile 3 und 4 in jedem Fall der Spalt 14 zwischen den Endabschnitten 11 und 12 vorliegt, unabhängig davon, in welcher Relativlage bezüglich der Durchströmungsrichtung 7 die beiden Gehäuseteile 3 und 4 zueinander positioniert werden.

Das Gehäuse 2 enthält außerdem einen Gehäuseeinlass 16 sowie einen Gehäuseauslass 17. Im Inneren des Gehäuses 2 erstreckt sich vom Gehäuseeinlass 16 bis zum ersten Monolithen 5 ein Einlasskörper 18, der ebenfalls koaxial zur Längsachse 15 ausgerichtet ist. Dieser Einlasskörper 18 ist dabei so geformt, dass sich quer zur Durchströmungsrichtung 7 zwischen dem Einlasskörper 18 und dem Gehäuse 2 ein erster Hohlraum 19 ausgebildet ist, der in Umfangsrichtung geschlossen umläuft. In diesem ersten Hohlraum 19 ist ein Gasvolumen eingeschlossen, das eine thermisch isolierende Wirkung besitzt und das Gehäuse 2 vor einer direkten Beaufschlagung mit den heißen Abgasen schützt.

Im Bereich dieses ersten Hohlraums 19 ist am Gehäuse 2 außerdem ein Sondenanschluss 20 ausgebildet, an dem eine Sonde, insbesondere eine Lambdasonde, an das Gehäuse 2 anschließbar ist. Fluchtend zu diesem Sondenanschluss 20 enthält der Einlasskörper 18 eine Sondenöffnung 21, durch welche die Sonde in das Innere des Einlasskörpers 18 und somit in die Abgasströmung hineinragt, wenn die Sonde an den Katalysator 1 angeschlossen ist.

Der Einlasskörper 18 besitzt ein Eintrittsende 22 und ein Austrittsende 23. Im Bereich seines Eintrittsendes 22 ist der Einlasskörper 18 am Gehäuse 2 befestigt, beispielsweise durch eine entsprechende Schweißnaht. In das Eintrittsende 22 ist hier ein Einlassblock 24 eingesetzt, über den z.B. ein oder mehrere Abgasskrümmer der Brennkraftmaschine an den Katalysator 1 anschließbar sind.

Das Austrittsende 23 des Einlasskörpers 18 ist mittels eines ersten Positionierrings 25 im Gehäuse 2 gehaltert. Dieser erste Positionierring 25 besitzt ein L-förmiges Profil, in welches das Austrittsende 23 eingesetzt ist. Der erste Postionierring 25 fasst das Austrittsende 23 des Einlasskörpers 18 radial außen in Umfangsrichtung ein und stützt sich radial am Gehäuse 2 und axial einerseits am Einlasskörper 18 und andererseits am ersten Monolithen 5 ab. Durch das Einbringen des ersten Monolithen 5 ist der erste Positionierring 25 axial fixiert, wodurch gleichzeitig das freie Austrittsende 23 des Einlasskörpers 18 positioniert ist.

Der erste Positionierring 25 ist dabei im ersten Gehäuseteil 3 angeordnet, in dem auch der erste Monolith 5 untergebracht ist. Bei der Ausführungsform gemäß Fig. 1 ist auch das Eintrittsende 22 des Einlasskörpers 18 im ersten Gehäuseteil 3 untergebracht. Im Unterschied dazu ist bei der Ausführungsform gemäß Fig. 2 ein Einlassgehäuseteil 26 vorgesehen, in dem das Eintrittsende 22 des Einlasskörpers 18 angeordnet ist. Die Anbindung des Einlassgehäuseteils 26 an das erste Gehäuseteil 3 erfolgt hier dadurch, dass beide Gehäuseteile 3 und 26 teleskopisch ineinander gesteckt und in einem Steckbereich 27 miteinander verschweißt sind.

Bei den hier gezeigten Ausführungsformen enthält das Gehäuse 2 außerdem einen Auslasskörper 28, der sich vom Gehäuseauslass 17 bis zum zweiten Monolithen 8 erstreckt. Quer zur Durchströmungsrichtung 7 ist auch hier zwischen dem Auslasskörper 28 und dem Gehäuse 2 ein zweiter Hohlraum 29 ausgebildet, der in der Umfangsrichtung geschlossen umläuft. Auch dieser zweite Hohlraum 29 enthält ein thermisch isolierend wirkendes Gasvolumen, durch das das Gehäuse 2 vor einer direkten Beaufschlagung mit den heißen Abgasen geschützt ist.

Auch der Auslasskörper 28 weist ein Eintrittsende 30 und ein Austrittsende 31 auf. Zur Halterung des Auslasskörpers 28 im Gehäuse 2 ist ein zweiter Positionierring 32 vorgesehen, der ebenfalls ein L-förmiges Profil besitzt, in welches das Eintrittsende 30 eingesetzt ist. Der zweite Positionierring 32 stützt sich radial am Gehäuse 2 und axial einerseits am zweiten Monolithen 8 und andererseits am Auslasskörper 28 ab. Das Austrittsende 31 des Auslasskörpers 28 ist, insbesondere durch eine Schweißnaht, am Gehäuseauslass 17 mit dem Gehäuse 2 fest verbunden. Durch das Einbringen des zweiten Monolithen 8 in das Gehäuse 2 wird der zweite Positionierring 32 fixiert, wodurch die Positionierung des freien Eintrittsendes 30 des Auslasskörpers 28 erfolgt.

Der zweite Positionierring 32 und somit das Eintrittsende 30 des Auslasskörpers 28 sind hier im zweiten Gehäuseteil 4 angeordnet, in dem sich auch der zweite Monolith 8 befindet. Am zweiten Gehäuseteil 4 ist bei der Ausführungsform gemäß Fig. 1 ein separates Auslassgehäuseteil 33 befestigt, wobei auch hier zweckmäßig das Auslassgehäuseteil 33 in das zweite Gehäuseteil 4 eingesteckt ist und zweckmäßig in einem Steckbereich 34 damit verschweißt ist. Im Unterschied dazu kann bei der Ausführungsform gemäß Fig. 2 der den Gehäuseauslass 17 enthaltende Abschnitt des Gehäuses 2 einteilig bzw. einstückig am zweiten Gehäuseteil 4 ausgebildet sein.

Die Fig. 1 und 2 zeigen eine weitere Besonderheit des erfindungsgemäßen Katalysators 1. Der zweite Monolith 8 besitzt eine bestimmte axiale Länge. Das zweite Gehäuseteil 4 ist so dimensioniert, dass auch ein anderer zweiter Monolith 8 darin eingesetzt werden kann, der eine andere, z.B. eine größere axiale Länge besitzt. Um eine solche Variante zu realisieren, müssen das zweite Gehäuseteil 4 und somit die Außenkontur des Katalysators 1 nicht verändert werden; es muss lediglich anstelle des gezeigten Auslasskörpers 28 ein anderer, mit unterbrochener Linie angedeuteter Auslasskörper 28' eingesetzt werden.

Der Zusammenbau des in Fig. 1 gezeigten Katalysators 1 erfolgt beispielsweise wie folgt:

In das erste Gehäuseteil 3 werden nacheinander von rechts, also entgegen der Strömungsrichtung 7, der Einlasskörper 18, der erste Positionierring 25 und der erste Monolith 5 einschließlich der zugehörigen Monolith-Lagerung 6 eingeschoben. Gleichzeitig oder später kann der Einlassblock 24 von links, also in Strömungsrichtung 7, in den Einlasskörper 18 eingesetzt werden. Anschließend werden in das zweite Gehäuseteil 4 von rechts nacheinander das erste Gehäuseteil 3, der zweite Monolith 8 einschließlich der zugehörigen Monolith-Lagerung 9, der zweite Positionierring 32, der Auslasskörper 28 und das Auslassgehäuseteil 33 eingesetzt. Die erforderlichen Schweißnähte werden zu geeigneten Zeitpunkten angebracht, insbesondere nach einem gegebenenfalls erforderlichen Längenausgleich, mit dem Toleranzen der Gehäuseteile 3, 4 in der Steckrichtung bzw. in der Längsrichtung eliminiert werden können, indem die Gehäuseteile 3, 4 und ggf. 33 im jeweiligen Steckbereich 10 bzw. 34 entsprechend relativ zueinander verstellt werden.

Der Zusammenbau des Katalysators 1 gemäß Fig. 2 erfolgt beispielsweise wie folgt:

Einsetzen des Einlassgehäuseteils 26 in das erste Gehäuseteil 3; Einsetzen des Einlasskörpers 18, des ersten Positionierrings 25 und des ersten Monolithen 5 einschließlich der zugehörigen Monolithen-Lagerung 6 von rechts in das erste Gehäuseteil 3 bzw. in das Einlassgehäuseteil 26. Anschließend werden in das zweite Gehäuseteil 4 von links der Auslasskörper 28, der zweite Positionierring 32, der zweite Monolith 8 mit zugehöriger Lagerung 9 und das erste Gehäuseteil 3 eingesetzt. Dabei besitzt das zweite Gehäuseteil 4 im Steckbereich 10 zu diesem Zeitpunkt noch nicht seine Querschnittseinschnürung an seinem äußeren Endabschnitt 12. Diese wird erst nach dem Einstecken des ersten Gehäuseteils 3 durch ein entsprechendes Umformverfahren hergestellt.

## Patentansprüche

1. Katalysator für eine Brennkraftmaschine, insbesondere eines Kraftfahrzeugs,
- mit einem Gehäuse (2), das wenigstens aus zwei in der Durchströmungsrichtung (7) des Gehäuses (2) ineinander gesteckten Gehäuseteilen (3, 4) zusammengebaut ist,
- wobei in einem ersten Gehäuseteil (3) ein erster Monolith (5) gelagert ist,
- wobei in einem zweiten Gehäuseteil (4) ein zweiter Monolith (8) gelagert ist,
- wobei sich in einem Steckbereich (10) ein äußerer Endabschnitt (12) des zweiten Gehäuseteils (4) und ein in den äußeren Endabschnitt (12) eingesteckter innerer Endabschnitt (11) des ersten Gehäuseteils (3) gegenseitig überlappen,
- wobei innerhalb des Steckbereichs (10) eine Übergangszone (13) ausgebildet ist, in der die Monolithen (5, 8) in der Durchströmungsrichtung (7) voneinander beabstandet sind,
- wobei in der Übergangszone (13) die Querschnitte der Gehäuseteile (3, 4) so aufeinander abgestimmt sind, dass quer zur Durchströmungsrichtung (7) ein in Umfangsrichtung geschlossen umlaufender Spalt (14) zwischen dem inneren Endabschnitt (11) und dem äußeren Endabschnitt (12) ausgebildet ist,
**dadurch gekennzeichnet,**
- **dass** die Gehäuseteile (3, 4) teleskopisch ineinander gestreckt sind,
- **dass** der innere Endabschnitt (11) des ersten Gehäuseteils (3) einen sich zum zweiten Monolithen (8) hin aufweitenden Querschnitt aufweist,
- **dass** der äußere Endabschnitt (12) des zweiten Gehäuseteils (4) einen sich bis zur Anlage am ersten Gehäuseteil (3) verjüngenden Querschnitt aufweist,
- **dass** der äußere Endabschnitt (12) in seinem sich verjüngenden Bereich stärker gegenüber der Durchströmungsrichtung (7) im Steckbereich (10) geneigt ist als der sich aufweitende Bereich des inneren Endabschnitts (11).

2. Katalysator nach Anspruch 1
**dadurch gekennzeichnet,**
**dass** sich der Spalt (14) in der Durchströmungsrichtung (7) im wesentlichen vom ersten Monolithen (5) bis zum zweiten Monolithen (8) erstreckt.

3. Katalysator nach Anspruch 1 oder 2,
**dadurch gekennzeichnet,**
**dass** der innere Endabschnitt (11) des ersten Gehäuseteils (3) an seinem freien Ende im wesentlichen den selben Querschnitt wie der zweite Monolith (8) aufweist.

4. Katalysator nach einem der Ansprüche 1 bis 3,
**dadurch gekennzeichnet,**
**dass** das Gehäuse (2) einen Einlasskörper (18) enthält, der sich von einem Gehäuseeinlass (16) bis zu dem stromauf angeordneten Monolithen (5) erstreckt, wobei quer zur Durchströmungsrichtung (7) ein in Umfangsrichtung geschlossen umlaufender erster Hohlraum (19) zwischen dem Einlasskörper (18) und dem Gehäuse (2) ausgebildet ist.

5. Katalysator nach Anspruch 4,
**dadurch gekennzeichnet,**
- **dass** ein Eintrittsende (22) des Einlasskörpers (18) am Gehäuse (2) befestigt ist und
- **dass** ein Austrittsende (23) des Einlasskörpers (18) über einen ersten Positionierring (25) im Gehäuse (2) gehaltert ist, der das Austrittsende (23) quer zur Durchströmungsrichtung (7) außen einfasst,
- wobei sich der erste Positionierring (25) in der Durchströmungsrichtung (7) einerseits am Einlasskörper (18) und andererseits am stromauf angeordneten Monolithen (5) und quer zur Durchströmungsrichtung (7) am Gehäuse (2) abstützt.

6. Katalysator nach Anspruch 4 oder 5,
**dadurch gekennzeichnet,**
**dass** das Gehäuse (2) im Bereich des Einlasskörpers (18) einen Sondenanschluss (20) aufweist und dass der Einlasskörper (18) fluchtend zum Sondenanschluss (20) eine Sondenöffnung (21) aufweist, durch die eine am Sondenanschluss (20) angebrachte Sonde in das Innere des Einlasskörpers (18) hineinragt.

7. Katalysator nach einem der Ansprüche 4 bis 6,
**dadurch gekennzeichnet,**
**dass** der erste Positionierring (25) in demjenigen Gehäuseteil (3) angeordnet ist, in dem auch der stromauf angeordnete Monolith (5) untergebracht ist.

8. Katalysator nach einem der Ansprüche 4 bis 7,
**dadurch gekennzeichnet,**
**dass** das Eintrittsende (23) des Einlasskörpers (18) in demjenigen Gehäuseteil (3) angeordnet ist, in dem auch der stromauf angeordnete Monolith (5) untergebracht ist.

9. Katalysator nach einem der Ansprüche 4 bis 7,
**dadurch gekennzeichnet,**
**dass** das Eintrittsende (22) des Einlasskörpers (18) in einem Einlassgehäuseteil (26) angeordnet ist, wobei das Einlassgehäuseteil (26) und das benachbarte Gehäuseteil (3) teleskopisch ineinander gesteckt sind.

10. Katalysator nach einem der Ansprüche 1 bis 9,
**dadurch gekennzeichnet,**
**dass** das Gehäuse (2) einen Auslasskörper (28) enthält, der sich von einem Gehäuseauslass (17) bis zu dem stromab liegenden Monolithen (8) erstreckt, wobei quer zur Durchströmungsrichtung (7) ein in Umfangsrichtung geschlossen umlaufender zweiter Hohlraum (29) zwischen dem Auslasskörper (28) und dem Gehäuse (2) ausgebildet ist.

11. Katalysator nach Anspruch 10,
**dadurch gekennzeichnet,**
- **dass** ein Austrittsende (31) des Auslasskörper (28) am Gehäuse (2) befestigt ist und
- **dass** ein Eintrittsende (30) des Auslasskörpers (28) über einen zweiten Positionierring (32) im Gehäuse (2) gehaltert ist, der das Eintrittsende (30) quer zur Durchströmungsrichtung (7) außen einfasst,
- wobei sich der zweite Positionierring (32) in der Durchströmungsrichtung (7) einerseits am Auslasskörper (28) und andererseits am stromab angeordneten Monolithen (8) und quer zur Durchströmungsrichtung (7) am Gehäuse (2) abstützt.

12. Katalysator nach Anspruch 10 oder 11,
**dadurch gekennzeichnet,**
**dass** der zweite Positionierring (32) in demjenigen Gehäuseteil (4) angeordnet ist, in dem auch der stromab liegende Monolith (8) untergebracht ist.

13. Katalysator nach einem der Ansprüche 9 bis 12,
**dadurch gekennzeichnet,**
**dass** das Austrittsende (31) des Auslasskörpers (28) in demjenigen Gehäuseteil (4) angeordnet ist, in dem auch der stromab liegende Monolith (8) untergebracht ist.

14. Katalysator nach einem der Ansprüche 9 bis 12,
**dadurch gekennzeichnet,**
**dass** das Austrittsende (31) des Auslasskörpers (28) in einem Auslassgehäuseteil (33) angeordnet ist, wobei das Auslassgehäuseteil (33) und das benachbarte Gehäuseteil (4) teleskopisch ineinander gesteckt sind.

## Claims

1. A catalytic converter for an internal combustion engine, in particular in a motor vehicle
- having a housing (2) which is assembled from two housing parts (3, 4) inserted one into the other in the direction of flow (7) of the housing (2),
- a first monolith (5) being supported in a first housing part (3),
- a second monolith (8) being supported in a second housing part (4),
- an outer end section (12) of the second housing part (4) and an inner end section (11) of the first housing part (3) inserted into the outer end section (12) overlapping mutually in a telescoping area (10),
- a transition zone (13) being formed within the telescoping area (10) in which the monoliths (5, 8) are arranged with a distance between them in the direction of flow (7),
- the cross sections of the housing parts (3, 4) being coordinated in the transition zone (13) so that a gap (14) running in the circumferential direction across the direction of flow (7) in a closed manner is formed between the inner end section (11) and the outer end section (12),
**characterized in that**
- the housing parts (3, 4) are telescoped into one another,
- the inner end section (11) of the first housing part (3) has a cross section which widens toward the second monolith (8),
- the outer end section (12) of the second housing part (4) has a cross section which tapers until it comes to rest against the first housing part (3),
- the outer end section (12) is inclined with respect to the direction of flow (7) in its tapering area to a greater extent than the widening area of the inside end section (11) in the telescoping area (10).

2. The catalytic converter according to Claim 1,
**characterized in that**
the gap (14) extends essentially in the direction of flow (7) from the first monolith (5) the second monolith (8).

3. The catalytic converter according to Claim 1 or 2,
**characterized in that**
the inner end section (11) of the first housing part (3) has essentially the same cross section on its free end as the second monolith (8).

4. The catalytic converter according to one of Claims 1 through 3,
**characterized in that**
the housing (2) has an inlet body (18) which extends from a housing inlet (16) to the monolith (5) which is arranged upstream, with a first hollow space (19) which runs around the circumferential direction in a closed ring across the direction of flow (8)is formed between the inlet body (18) and the housing (2).

5. The catalytic converter according to Claim 4,
**characterized in that**
- an inlet end (22) of the inlet body (18) is attached to the housing (2) and
- an outlet end (23) of the outlet body (18) is held by a first positioning ring (25) in the housing (2), gripping the outlet end (23) on the outside across the direction of flow (7),
- the first positioning ring (25) being supported first on the inlet body (18) in the direction of flow (7) and second on the monolith (5) arranged upstream and supported across the direction of flow (7) on the housing (2).

6. The catalytic converter according to Claim 4 or 5,
**characterized in that**
the housing (2) has a probe connection (20) in the area of the inlet body (18) and the inlet body (18) has a probe opening (21) which is aligned with the probe connection (20) and through which a probe mounted on the probe connection (20) protrudes into the interior of the inlet body (18).

7. The catalytic converter according to one of Claims 4 through 6,
**characterized in that**
the first positioning ring (25) is arranged in the housing part (3) in which the monolith (5) that is arranged upstream is also accommodated.

8. The catalytic converter according to one of Claims 4 through 7,
**characterized in that**
the inlet end (23) of the inlet body (18) is arranged in the housing part (3) in which the monolith (5) which is arranged upstream is also accommodated.

9. The catalytic converter according to one of Claims 4 through 7,
**characterized in that**
the inlet end (22) of the inlet body (18) is arranged in an inlet housing part (26) whereby the inlet housing part (26) and the adjacent housing part (3) are telescoped one into the other.

10. The catalytic converter according to one of Claims 1 through 9,
**characterized in that**
the housing (2) contains an outlet body (28) which extends from a housing outlet (17) to the downstream monolith (8) whereby a second hollow space (29) which runs around it in the circumferential direction in a closed ring across the direction of flow (7) is formed between the outlet body (28) and the housing (2).

11. The catalytic converter according to Claim 10,
**characterized in that**
- an outlet end (31) of the outlet body (28) is attached to the housing (2) and
- an inlet end (30) of the outlet body (28) is supported by a second positioning ring (32) in the housing (2) which encompasses the inlet end (30) on the outside across the direction of flow (7), whereby the second positioning ring (32) is supported in the direction of flow (7) first on the outlet body (28) and secondly on the monolith (8) arranged downstream and is supported across the direction of flow (7) on the housing (2).

12. The catalytic converter according to Claim 10 or 11,
**characterized in that**
the second positioning ring (32) is arranged in the housing part (4) in which the downstream monolith (8) is also accommodated.

13. The catalytic converter according to one of Claims 9 through 12,
**characterized in that**
the outlet end (31) of the outlet body (28) is arranged in the housing part (4) in which the downstream monolith (8) is also accommodated.

14. The catalytic converter according to one of Claims 9 through 12,
**characterized in that**
the outlet end (31) of the outlet body (28) is arranged in an outlet housing part (33) with the outlet housing part (33) and the adjacent housing part (4) being telescoped one into the other.

## Revendications

1. Pot catalytique pour un moteur à combustion interne, en particulier d'un véhicule automobile,
- comprenant un carter (2), composé d'au moins deux parties de carter (3, 4) mutuellement emboîtées dans la direction d'écoulement (7) du carter (2),
- un premier monolithe (5) étant monté dans une première partie de carter (3),
- un second monolithe (8) étant monté dans une seconde partie de carter (4),
- une section extrême extérieure (12) de la seconde partie de carter (4) et une section extrême intérieure (11) de la première partie de carter (3), emmanchée dans la section extrême extérieure (12), se chevauchant mutuellement dans une zone d'emboîtement (10),
- une zone de transition (13), dans laquelle les monolithes (5, 8) sont distants l'un de l'autre dans la direction d'écoulement (7), étant réalisée à l'intérieur de la zone d'emboîtement (10),
- les sections transversales des parties de carter (3, 4) étant mutuellement adaptées dans la zone de transition (13) de sorte qu'une fente circulaire (14), fermée dans la direction périphérique, est réalisée transversalement à la direction d'écoulement (7), entre la section extrême intérieure (11) et la section extrême extérieure (12),
**caractérisé en ce que** :
- les parties de carter (3, 4) sont emboîtées l'une dans l'autre de façon télescopique,
- la section extrême intérieure (11) de la première partie de carter (3) présente une section transversale qui s'élargit en direction du second monolithe (8),
- la section extrême extérieure (12) de la seconde partie de carter (4) présente une section transversale qui se rétrécit jusqu'à l'appui sur la première partie de carter (3),
- dans sa zone rétrécie, la section extrême extérieure (12) a une inclinaison plus forte par rapport à la direction d'écoulement (7), dans la zone d'emboîtement (10), que la zone élargie de la section extrême intérieure (11).

2. Pot catalytique suivant la revendication 1, **caractérisé en ce que** la fente (14) s'étend dans la direction d'écoulement (7) essentiellement du premier monolithe (5) jusqu'au second monolithe (8).

3. Pot catalytique suivant l'une des revendications 1 et 2, **caractérisé en ce que** la section extrême intérieure (11) de la première partie de carter (3) présente sur son extrémité libre essentiellement la même section transversale que le second monolithe (8).

4. Pot catalytique suivant l'une des revendications 1 à 3, **caractérisé en ce que** le carter (2) comporte un corps d'admission (18) qui s'étend d'une admission de carter (16) jusqu'au monolithe (5) disposé en amont, un premier espace creux circulaire (19), fermé dans la direction périphérique, étant alors réalisé entre le corps d'admission (18) et le carter (2) transversalement à la direction d'écoulement (7).

5. Pot catalytique suivant la revendication 4, **caractérisé en ce que**
- une extrémité d'entrée (22) du corps d'admission (18) est fixée sur le carter (2) et
- une extrémité de sortie (23) du corps d'admission (18) est maintenue dans le carter (2) par l'intermédiaire d'une première bague de positionnement (25), qui borde extérieurement l'extrémité de sortie (23) transversalement à la direction d'écoulement (7),
- la première bague de positionnement (25) s'appuyant dans la direction d'écoulement (7) d'un côté sur le corps d'admission (18) et de l'autre côté sur le monolithe (5) disposé en amont et sur le carter (2) transversalement à la direction d'écoulement (7).

6. Pot catalytique suivant l'une des revendications 4 et 5, **caractérisé en ce que** le carter (2) présente un raccord de sonde (20) dans la zone du corps d'admission (18) et que le corps d'admission (18) présente une ouverture de sonde (21) alignée sur le raccord (20), au travers de laquelle une sonde montée sur le raccord (20) pénètre à l'intérieur du corps d'admission (18).

7. Pot catalytique suivant l'une des revendications 4 à 6, **caractérisé en ce que** la première bague de positionnement (25) est disposée dans la partie de carter (3), dans laquelle est également logé le monolithe (5) disposé en amont.

8. Pot catalytique suivant l'une des revendications 4 à 7, **caractérisé en ce que** l'extrémité de sortie (23) du corps d'admission (18) est disposée dans la partie de carter (3), dans laquelle est également logé le monolithe (5) disposé en amont.

9. Pot catalytique suivant l'une des revendications 4 à 7, **caractérisé en ce que** l'extrémité d'entrée (22) du corps d'admission (18) est disposée dans une partie de carter d'admission (26), la partie de carter d'admission (26) et la partie de carter voisine (3) étant emmanchées l'une dans l'autre de façon télescopique.

10. Pot catalytique suivant l'une des revendications 1 à 9, **caractérisé en ce que** le carter (2) comporte un corps d'échappement (28) qui s'étend d'un échappement de carter (17) jusqu'au monolithe (8) situé en aval, un second espace creux circulaire (29), fermé dans la direction périphérique, étant alors réalisé entre le corps d'échappement (28) et le carter (2) transversalement à la direction d'écoulement (7).

11. Pot catalytique suivant la revendication 10, **caractérisé en ce que**
- une extrémité de sortie (31) du corps d'échappement (28) est fixée sur le carter (2) et
- une extrémité d'entrée (30) du corps d'échappement (28) est maintenue dans le carter (2) par l'intermédiaire d'une seconde bague de positionnement (32), qui borde extérieurement l'extrémité d'entrée (30) transversalement à la direction d'écoulement (7),
- la seconde bague de positionnement (32) s'appuyant dans la direction d'écoulement (7) d'un côté sur le corps d'échappement (28) et de l'autre côté sur le monolithe (8) disposé en aval et sur le carter (2) transversalement à la direction d'écoulement (7).

12. Pot catalytique suivant l'une des revendications 10 et 11, **caractérisé en ce que** la seconde bague de positionnement (32) est disposée dans la partie de carter (4), dans laquelle est également logé le monolithe (8) situé en aval.

13. Pot catalytique suivant l'une des revendications 9 à 12, **caractérisé en ce que** l'extrémité de sortie (31) du corps d'échappement (28) est disposée dans la partie de carter (4), dans laquelle est également logé le monolithe (8) situé en aval.

14. Pot catalytique suivant l'une des revendications 9 à 12, **caractérisé en ce que** l'extrémité de sortie (31) du corps d'échappement (28) est disposée dans une partie de carter d'échappement (33), la partie de carter d'échappement (33) et la partie de carter voisine (4) étant emboîtées l'une dans l'autre de façon télescopique.
